**Europäisches Patentamt**

**European Patent Office**

**Office européen des brevets**

(19)

(11) Veröffentlichungsnummer : **0 066 683**
**B1**

(12) # EUROPÄISCHE PATENTSCHRIFT

(45) Veröffentlichungstag der Patentschrift :
03.12.86

(21) Anmeldenummer : **82102704.2**

(22) Anmeldetag : **31.03.82**

(51) Int. Cl.⁴ : **B 65 D 88/12**, B 60 P   1/64

(54) Offene, stapelbare Behälter, insbesondere Sammelbehälter zum Transport von Bauschutt.

(30) Priorität : **01.04.81 DE 3113083**

(43) Veröffentlichungstag der Anmeldung :
**15.12.82 Patentblatt 82/50**

(45) Bekanntmachung des Hinweises auf die Patenterteilung : **03.12.86 Patentblatt 86/49**

(84) Benannte Vertragsstaaten :
**AT BE CH FR GB IT LI LU NL SE**

(56) Entgegenhaltungen :
**DE-A- 2 535 247**
**DE-B- 2 507 481**

(73) Patentinhaber : **Bock, Normann**
**Zum Brook 48**
**D-2808 Syke - Barrien (DE)**

(72) Erfinder : **Bock, Normann**
**Zum Brook 48**
**D-2808 Syke-Barrien (DE)**
Erfinder : **Schumacher, Martin**
**Bucheneck 10**
**D-2819 Nordwohlde (DE)**

(74) Vertreter : **Jabbusch, Wolfgang, Dr.**
**Elisabethstrasse 6**
**D-2900 Oldenburg (DE)**

## Beschreibung

Die Erfindung bezieht sich auf mit Gleitkufen versehene Behälter, insbesondere zum Transport von Bauschutt, die zum Stapeln durch Eingleiten und Einschwenken in am Boden hinter einem Lastwagen stehende gleichartige Behälter mit nach oben und außen geneigten, mit Verstärkungen versehenen Seiten- bzw. Frontwänden und einem Aufnahmebeschlag für den Angriff eines wageneigenen Ladegerätes versehen sind (DE-A-25 35 247).

Die bekannten Behälter dieser Art sind, um ein möglichst problemloses Eingleiten des oberen in den unteren Behälter zu gewährleisten, als verhältnismäßig flache Schalen mit stark geneigten Wandungen ausgebildet. Dies hat den Nachteil, daß durch die starke Neigung der Wandungen verhältnismäßig viel Nutzraum für den Transport verlorengeht.

Der Erfindung liegt die Aufgabe zugrunde, Behälter der eingangs bezeichneten Art zu schaffen, die zur optimalen Ausnutzung des Ladevolumens mit möglichst steilen Wandungen versehen sind.

Bei der Lösung dieser Aufgabe geht die Erfindung von der Überlegung aus, daß auch das Stapeln im Gleitbetrieb prinzipiell verhältnismäßig geringe Neigungen der Seitenwandungen und insbesondere der vorderen Stirnwand zuläßt, wenn der obere Behälter erst, nachdem er durch die Gleitbewegung in Anschlagstellung zum unteren Behälter gelangt ist, durch Schwenkbewegung um die obere Kante der die Gleitbewegung begrenzenden Stirnwand des unteren, aufnehmenden Behälters in diesen eingeschwenkt wird. Besonders leicht ist eine solche Bewegungsfolge mit Hilfe der bereits auf dem Markt befindlichen sogenannten Hakenaufnahmegeräte zu realisieren. Bisher wurde aber diese Möglichkeit nicht genutzt, vielmehr hat man die im Gleitbetrieb stapelbaren Behälter bisher mit stark geneigter Frontwandung ausgestattet, in welche die am Behälter angebrachten Gleitkufen auslaufen. Dabei hat man den von den Gleitkufenspitzen im Bereich der Frontwandung beanspruchten Raum auch noch zur Unterbringung von Seilkupplungen für Kippbrückengeräte mit Seil- bzw. Kettenaufnahme genutzt.

Erfindungsgemäß läßt sich die mit dieser Gestaltung verbundene Einbuße an Ladevolumen dadurch vermeiden, daß die Gleitkufen vor den Außenflächen beider divergierender Stirnwände enden, und daß nach innen weisende Wandverstärkungen der Stirnwände in der inneren Freizone unter dem inneren Tauchbereich des im Stapel nächst oberen Behälters und nach außen weisende Wandverstärkungen in der äußeren Freizone über dem äußeren Tauchbereich des im Stapel nächst tieferen Behälters angebracht sind.

Es ist zweckmäßig, anstelle der früher außenseitig liegenden Kufenspitzen inseitige Fortsetzungen der Gleitkufen als Wandverstärkungen in der inneren Freizone der vorderen Stirnwand vorzusehen.

Setzt der obere Behälter beim Eintauchen in den unteren Behälter nicht, wie im Beispiel von DE-A-25 07 481 dargestellt, beim Absenken in die endgültige Stapelstellung mit seinen Gleitkufen auf den Boden des unteren Behälters auf, so ist es vorteilhaft, in der inneren Freizone Auflager für den im Stapel nächst oberen Behälter vorzusehen. Dabei können die genannten Gleitkufen-Fortsetzungen als Auflager für den oberen Behälter dienen. Vorteilhaft werden aber auch nahe der hinteren Stirnwand Auflager für den oberen Behälter vorgesehen, um so eine stabile Lastübertragung in den Kufenbereichen von Behälter zu Behälter zu gewährleisten.

Bei verhältnismäßig großer Höhe der Behälter können sich, insbesondere bei unebenem Grund, je nach Höhe der Ladefläche des Lastwagens Schwierigkeiten im Stapelbetrieb ergeben. Um solchen Schwierigkeiten vorzubeugen, werden erfindungsgemäß in der äußeren Freizone der vorderen Stirnwand Führungsstücke für die Kufen, z. B. Zentrierrollen, zum Zentrieren des Behälters beim Hochziehen oder Abgleitenlassen vorgesehen. Diese Zentrierrollen können höhenverstellbar angeordnet sein, indem sie beispielsweise um eine zur Gleitrichtung vertikale Achse schwenkbar und durch den gleitenden Behälter selbst aus der Tieflage in eine höhere Führungslage verdrängbar sind, ähnlich, wie es bei Spezialtransportgeräten mit Exzenterrollen zum Überwinden von Schwellen geschieht.

In der Zeichnung ist die Erfindung an Ausführungsbeispielen veranschaulicht.

Figuren 1 bis 4 zeigen in Seitenansicht die Aufnahme eines Behälters aus einem am Boden stehenden Behälterstapel auf einen Lastwagen in vier aufeinander folgenden Aufnahmestellungen,

Figur 5 zeigt in schematischer Darstellung einen Behälterstapel im Teillängsschnitt,

Figur 6 Seitenansicht einer Zentrierrollen-Anordnung,

Figur 7 eine Stirnansicht zu Fig. 6,

Figur 8 Seitenansicht einer Zentrierrollen-Anordnung mit Höhenverstellung, in Bereitschaftstiefstellung, und

Figur 9 Die Zentrierrollen-Anordnung nach Fig. 8 in der Arbeitshochstellung.

Die in der Zeichnung dargestellten Transportbehälter bestehen aus einer offenen Wanne mit rechteckigem Grundriß. Der Behälter 1 hat einen ebenen Boden 2.

Seine Seitenwandungen 3 sind nach außen geneigt, die Frontwand 4 unter einem Winkel gegen die Horizontale von etwa 80°, um die Behälter ineinander stapeln zu können.

Die Rückwand 5 ist als Tür ausgebildet und vertikal angeordnet. Zum Aufziehen auf die Ladefläche des Lastwagens W sind die Behälter mit Gleitkufen 6, 6 versehen, die sich über den ganzen Boden erstrecken. Hinten sind die Behälter, wie üblich, mit Schlepprollen R' versehen. Der Lastwagen ist zum Verladen der Behälter mit einem Hakenaufnahmegerät A mit Haken H ausgerüstet. Die Behälter weisen vorn an ihrer Frontwand 4 einen bügelförmigen Aufnahmebeschlag 7 für die Haken H auf. Die Aufnahmebeschläge sind dem jeweils vorliegenden Wechselsystem der eingesetzten Wagen entsprechend zu gestalten bzw. zu wählen. Auch ist es möglich, wahlweise benutzbare Beschläge vorzusehen. Das Stapeln der Behälter erfolgt am Boden hinter dem Lastwagen, indem ein auf dem Lastwagen befindlicher Behälter oder Behälterstapel in einem am Boden hinter dem Lastwagen stehenden Behälter herabgelassen wird, und zwar mit Hilfe der Hakenaufnahme durch Abgleiten des Behälters bzw. Behälterstapels vom Wagen über Heckrollen R, R. Damit hierbei eine gute Führung des abgleitenden Behälters ohne Kollision erfolgt, sind hinten am Behälter Stapelrollen 11, 11 angebracht, die sich beim Absenken auf die oberen Längsränder 8,8 des am Boden stehenden Behälters aufsetzen und die Führung bis zum Anschlag gegen die hintere Stirnfläche bzw. Tür des unteren Behälters übernehmen. Nachdem diese Stellung erreicht ist, wird der Behälter auch vorn bzw. über seine ganze Länge durch Schwenken um die Stapelrollen 11, 11 in den am Boden stehenden Behälter abgesenkt. Je nach Höhe des Behälters kann dabei das Absenken so weit erfolgen, daß die Gleitkufen 6, 6 auf dem Boden des unteren Behälters aufsetzen. Die Stapelrollen 11, 11 werden dabei ein wenig von den Längsrändern 8, 8 abgehoben und entlastet. Im dargestellten Beispiel befinden sich die Behälter mit ihren Gleitkufen in der Stapelposition wesentlich über dem Boden des nächst tieferen Behälters. Damit auch hierbei eine gute Abstützung mit Lastaufnahme durch den Boden bzw. die Gleitkufen des jeweils unteren Behälters erfolgt, sind Auflager 16 vorgesehen, die sich im Bereich über den Gleitkufen befinden, und zwar sowohl vorn als auch hinten im Behälter. Die vorderen Auflager 16 sind gleichzeitig als innere Fortsetzungen der Gleitkufen ausgebildet.

Die Rückwand ist, wie bereits oben gesagt, als Tür, und zwar doppelflügelige verschließbare Tür mit vertikalen Achsen 9, 9 ausgebildet, so daß der Behälter durch Kippen nach hinten entleert werden kann.

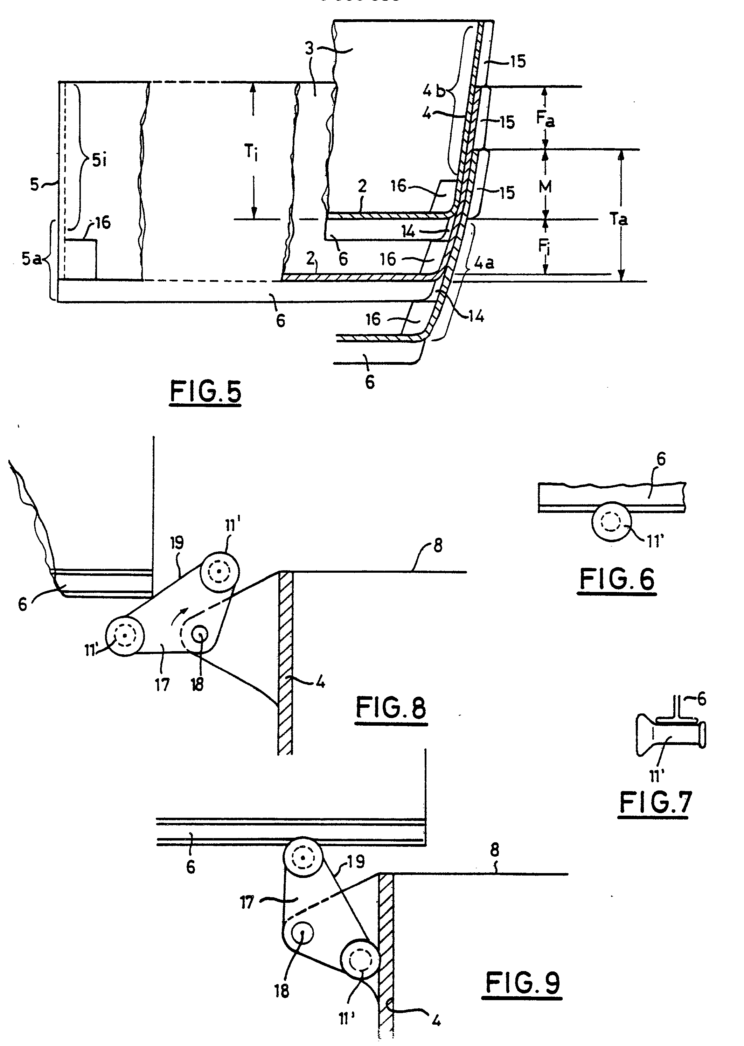

Wie insbesondere aus Fig. 5 ersichtlich ist, ist die Frontwand 4 des Behälters in einem Mittenbereich M sowohl innen als auch außen ohne Vorsprünge ausgeführt. Dieser Mittenbereich entspricht der Überlappung zwischen dem inneren Tauchbereich $T_i$ und dem äußeren Tauchbereich $T_a$ von drei gestapelten Behältern. Im inneren Tauchbereich $T_i$ ist der Behälter ohne Vorsprünge bis zu seinem oberen Rand und im äußeren Tauchbereich $T_a$ ohne Vorsprünge bis zu seinem Boden ausgeführt, und die Gleitkufen 6, 6 sind so angeordnet, daß sie die vorsprungsfreie Außenfläche keinesfalls überragen. Durch diese Gestaltung wird ermöglicht, die vordere Stirnwand optimal steil auszuführen. Die Größe dieser Neigung ist nur bedingt durch die Stärke der Wandung im Mittenbereich M und die Tauchtiefe $T_i$ bzw. $T_a$.

Die beiden Bereiche unterhalb des inneren Tauchbereiches $T_i$ und oberhalb des äußeren Tauchbereiches $T_a$ sind Wandbereiche, die prinzipiell beliebig stark ausgeführt werden können, ohne dadurch eine größere Neigung der Behälterwandung zu erfordern. In diesen beiden Bereichen, der inneren Freizone $F_i$ und der äußeren Freizone $F_a$ sind daher bei unveränderter Neigung der Behälterwandung Wanderverstärkungen (14, 15, 16) vorgesehen können, und auch, soweit erforderlich, Beschläge oder Armaturen angebracht werden.

Was oben für die vordere Stirnwand gesagt worden ist, gilt sinngemäß auch für die Seitenwandungen 3, 3.

Die mit der beschriebenen Gestaltung der Behälterwandungen erzielte Steilwandigkeit hat den Vorteil einer wesentlichen Steigerung des Nutzvolumens. Was hier für Behälter gesagt ist, die zum Verladen und Stapeln im Gleitverfahren ausgerüstet sind, gilt sinngemäß auch für Behälter, die zum Verladen im Hubverfahren eingerichtet, sind ; das Hubverfahren schließt aus anderen Gründen, nämlich deshalb das Erreichen optimalen Ladevolumens aus, weil die Behälter wegen des Platzbedarfes für die Hubarme des Verladegerätes erheblich schmaler sein müssen, als das beim Verladen im Gleitverfahren möglich ist. Dieser Raumverlust wächst mit der Länge des Behälters.

Zur optimalen Raumausnutzung muß man an die Grenzwerte der Wandungsneigung möglichst weit herangehen. Tut man dies, so muß weiterhin dafür Sorge getragen werden, daß beim Stapeln eine genaue Führung der zu stapelnden Behälter zueinander gewährleistet wird. Um dies sicherzustellen, sind im Bereich der Frontwand 4 Zentrierrollen 11', 11' angebracht, über welche die zu stapelnden Behälter mit ihren Gleitkufen 6, 6 in den am Boden stehenden Behälter einlaufen.

Der Gesamthöhe des Behälters sind natürlich auch Grenzen gesetzt. Die zulässige Höhe hängt insbesondere von der Höhe der Ladefläche des Lastwagens und auch von der Bauweise des Aufnahmegerätes ab. Geht man mit dem Höhenmaß an die Grenze dessen, was im Hinblick auf die zur Verfügung stehenden Lastwagen und ihre Ladeeinrichtung zulässig ist, so können gleichwohl Schwierigkeiten bei unebenem Gelände auftreten. Um dem vorzubeugen, können die Zentrierrollen 11', 11', wie aus Fig. 8 ersichtlich ist, an Rollenträgern 17, 17 angeordnet sein, welche um eine horizontale Achse 18 innerhalb der äußeren Freizone $F_a$ schwenkbar sind und Verstellnocken 19 aufweisen, gegen welche der abzusetzende Behälter bei zu hoher Randlage des am Boden stehenden Behälters stößt und durch seinen Schub nach hinten mit Hilfe des Hakengerätes ein Drehmoment auf den Rollenträger 17 ausübt, so daß dieser aus der Stellung nach Fig. 8 in Pfeilrichtung verschwenkt wird, in welcher die tiefer liegenden Zentrierrollen 11' in eine ausreichend hohe Führungslage gelangen.

Zusätzlich zu den durch die Wandverstarkungen 16 gebildeten Auflagern im Innern der Behälter können, wie bei bekannten Ausführungen der Stapelbehälter, an der Außenseite vordere Stapelstützen 12, 12 und hintere Stapelstützen 13, 13 vorgesehen sein, mit welchen sich die Behälter in der Stapelendstellung auf den Längsrändern des im Stapel tieferen Behälters abstützen.

In der Zeichnung sind in der inneren Freizone $F_i$ schematisch die Wandverstärkungen 14 und in der äußeren Freizone $F_a$ die Wandverstärkungen 15 angedeutet.

Um möglichst steile Wandungen des Behälters und damit ein großes Nutzvolumen zu erzielen, ist es vor allen Dingen von Bedeutung, daß in den Tauchbereichen innen vorsprungsfreie Innenflächen 4i, 5i, sowie auch 3i, und in den Tauchbereichen außen glatte Außenflächen 4a, 5a, sowie auch 3a, vorhanden sind.

In Rahmen der Erfindung sind noch mancherlei Abänderungen oder andere Ausführungen möglich ; insbesondere kann die Höhenverstellung der Zentrierrollen statt durch Exzenter bzw. Nockenanordnung auch durch andere, an sich bekannte Mechaniken erfolgen, und es kann dafür gesorgt werden, daß gegebenenfalls eine automatische Rückstellung, zum Beispiel durch Schwerkraft oder Federkraft erfolgt.

Stapelrollen könnten zur Führung am Boden hinten an den Gleitkufen und/oder zur Führung bzw. Zentrierung hinten zwischen den Längsrändern 8, 8 der Seitenwandungen 3, 3 und dem Boden 2 angeordnet sein. Zur bleibenden Zentrierung hinten könnten die Stapelrollen 11, 11 als Spurrollen in Anspassung an entsprechend profilierte Führungsbahnen ausgebildet sein, oder ein Abrollen an den Seiteninnenwandungen könnte vorwiegend die Zentrierung übernehmen, während die Lastaufnahme durch die Stapelrollen 11, 11 und die oberen Seitenränder erfolgt.

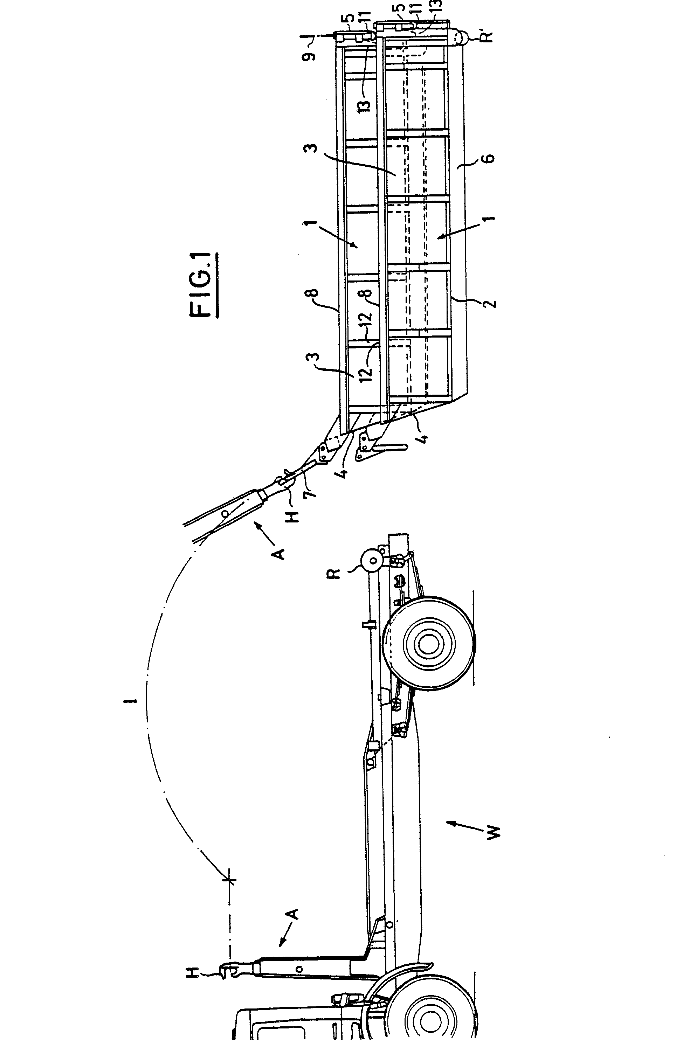

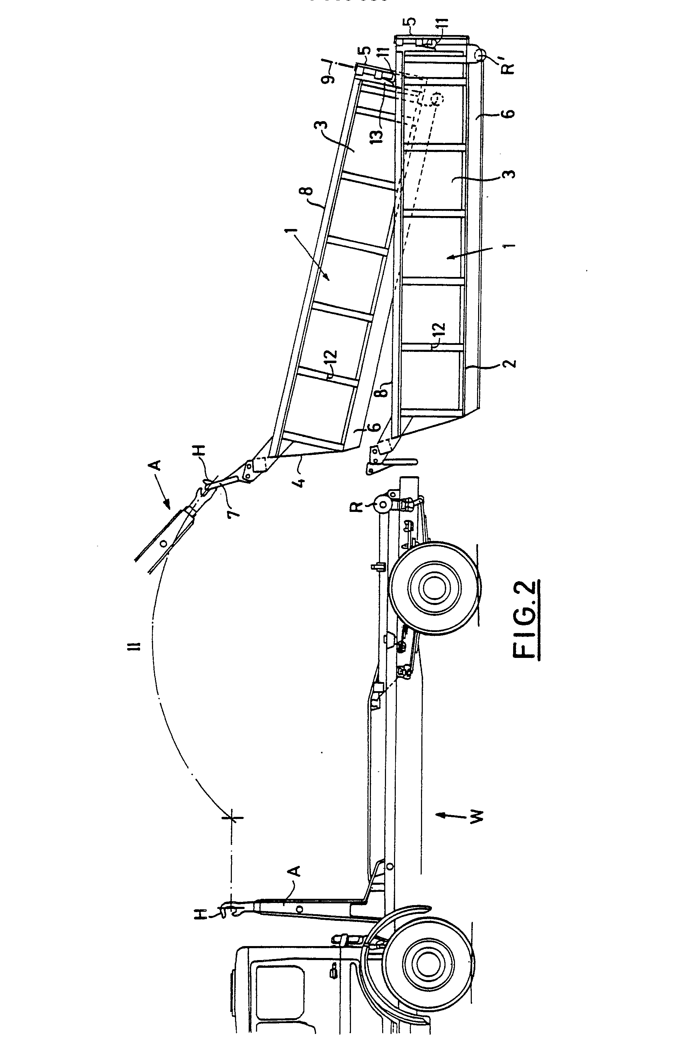

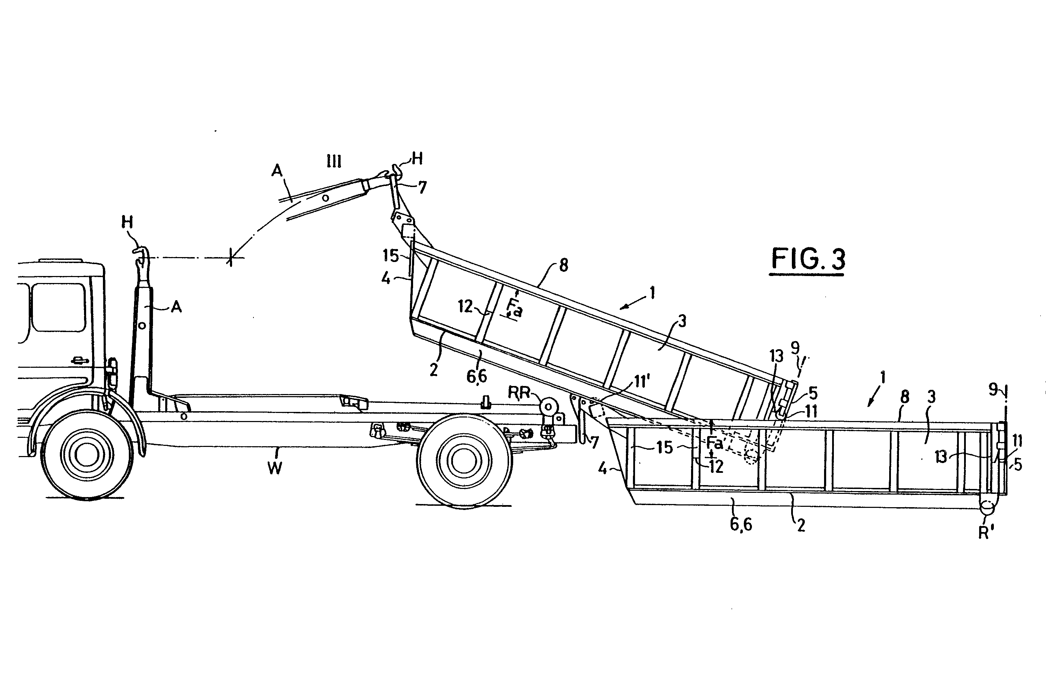

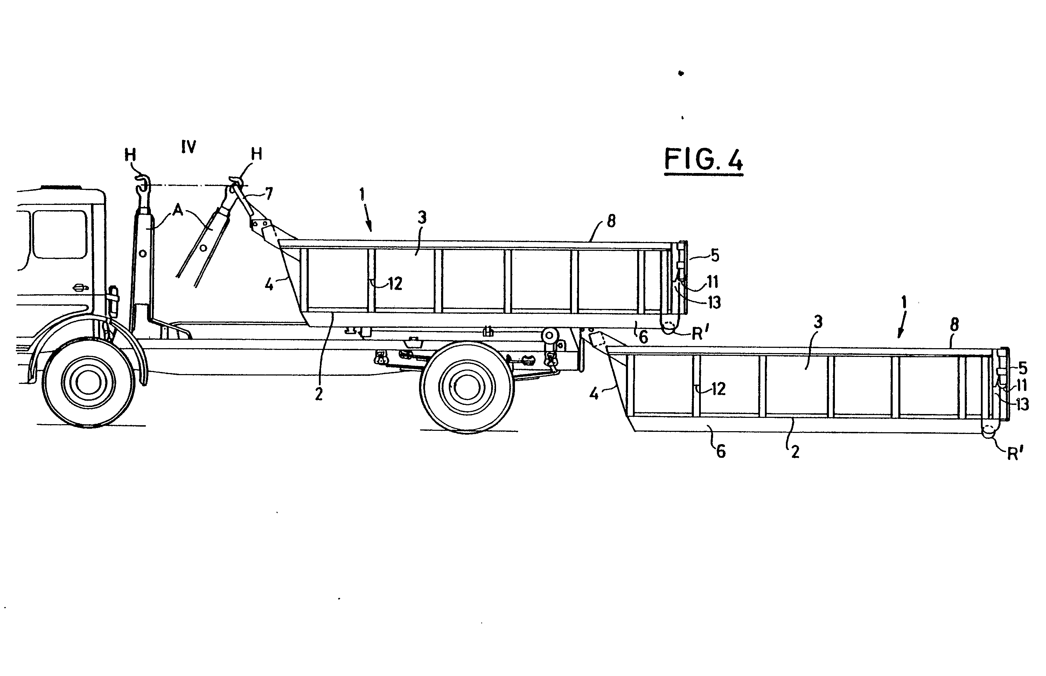

Die Spanten der Seitenwandungen in Fig. 1 bis 4 könnten auch unter der Freizone $F_a$ fehlen oder schwächer bzw. niedriger und breiter ausgeführt sein und gegebenenfalls innen in der unteren Freizone mit dem Zweck des Entleerens angepaßtem Profil fortgesetzt sein. Die vordere Stirnwand kann zur Versteifung, gegebenenfalls nur im Mittenbereich, leicht gewölbt sein. Die Stapelrollen können auch durch Gleitstücke ersetzt werden. Die Behälter könnten auch mit Schleppprollen R' auf Bodenschienen in Höhe der Auflagen 16 laufen.

## Patentansprüche

1. Offene, mit Gleitkufen (6) versehene Behälter (1), insbesondere zum Transport von Bauschutt, die zum Stapeln durch Eingleiten und Einschwenken in am Boden hinter einem Lastwagen stehende gleichartige Behälter mit nach oben und außen geneigten, mit Verstärkungen versehenen Seiten- bzw. Frontwänden (3 ; 4) und einem Aufnahmebeschlag (7) für den Angriff eines wageneigenen Ladegerätes (A) versehen sind, dadurch gekennzeichnet, daß die Gleitkufen (6) vor den Außenflächen der divergierenden Stirnwände (Front- bzw. Rückwand 4, 5) enden, und daß nach innen weisende Wandverstärkungen (14, 16) der Stirnwände in der inneren Freizone ($F_i$) unter dem inneren Tauchbereich ($t_i$) des im Stapel nächst oberen Behälters und nach außen weisende Wandverstärkungen (15) in der äußeren Freizone ($F_a$) über dem äußeren Tauchbereich ($t_a$) des im Stapel nächst tieferen Behälters angebracht sind.

2. Behälter nach Anspruch 1, dadurch gekennzeichnet, daß die Frontwand (4) im Mittelbereich (M) zur Festigkeitssteigerung leicht gewölbt ist.

3. Behälter nach Anspruch 1, dadurch gekennzeichnet, daß in der inneren Freizone ($F_i$) die Wandverstärkungen (16) Auflager für den im Stapel nächst oberen Behälter bilden.

4. Behälter nach Anspruch 3, dadurch gekennzeichnet, daß die Auflager (16) aus nach innen weisenden Fortsetzungen der Gleitkufen (6, 6) bestehen.

5. Behälter nach einem der Ansprüche 1 bis 5, dadurch gekennzeichnet, daß in der äußeren Freizone der Frontwand (4) Rollenträger (17) vorgesehen sind.

6. Behälter nach Anspruch 5, dadurch gekennzeichnet, daß die Rollenträger (17) als um eine horizontale Achse (18) schwenkbare Nocken ausgebildet sind.

7. Behälter nach Anspruch 6, dadurch gekennzeichnet, daß an den Rollenträgern (17) Zentrierrollen (11') angebracht sind.

8. Behälter nach Anspruch 7, dadurch gekennzeichnet, daß die Zentrierrollen (11') höhenverstellbar sind.

9. Behälter nach einem der Ansprüche 1 bis 8, mit verstärkenden Spanten der Seitenwände (3, 3), dadurch gekennzeichnet, daß die Spanten in der äußeren und inneren Freizone angeordnet sind.

## Claims

1. Open containers provided with sliding runners, in particular for transporting building rubble, which, in order to be stacked by being slid and swung into similar containers standing on the ground behind a lorry, comprise lateral and front walls inclined upwards and outwards and provided with reinforcements, and a receiving mounting for engaging on a loading device mounted on the lorry, characterized in that the sliding runners (6) terminate before reaching the outer faces of the diverging end walls (front or rear wall 4, 5 respectively), and inwardly orientated wall reinforcements (14, 16) of the end walls are provided in the inner free zone ($F_i$) below the inner nested region ($T_i$) of the next container above in the stack and outwardly orientated wall reinforcements (15) are provided in the outer free zone ($F_a$) above the outer nested region ($T_a$) of the next container below in the stack.

2. Containers according to Claim 1, characterized in that the front wall (4) is slightly convex in the central area (M) in order to increase its strength.

3. Containers according to Claim 1, characterized in that in the inner free zone ($F_i$) the wall reinforcements (16) form bearing surfaces for the next container above in the stack.

4. Containers according to Claim 3, characterized in that the bearing surfaces (16) consist of inwardly orientated extensions of the sliding runners (6, 6).

5. Containers according to any one of claims 1 to 4, characterized in that roller carriers (17) are provided in the outer free zone of the front wall (4).

6. Containers according to Claim 5, characterized in that the roller carriers (17) are constructed in the form of cams pivotable about a horizontal shaft (18).

7. Containers according to Claim 6, characterized in that centring rollers (11') are provided on the roller carriers (17).

8. Containers according to Claim 7, characterized in that the centring rollers (11') are vertically adjustable.

9. Containers according to any one of Claims 1 to 8, with reinforcing ribs on the side walls (3, 3), characterized in that the reinforcing ribs are provided in the outer and inner free zones.

**Revendications**

1. Réceptacles ouverts munis de patins de glissement, en particulier pour le transport de décombres qui, pour leur empilage par glissement et pivotement d'emboîtement dans un réceptacle analogue se trouvant sur le sol derrière un camion, sont munis de parois latérales et frontales inclinées vers le haut et vers l'extérieur portant des renforcements et d'une ferrure d'entraînement pour l'attelage d'un appareil de chargement sur camion, caractérisés en ce que les patins de glissement (6) se terminent à l'avant des surfaces extérieures des parois frontales divergentes (paroi avant et paroi arrière 4, 5) et que des renforcements de parois (14, 16) des parois frontales s'étendant vers l'intérieur sont établis dans la zone libre intérieure ($F_i$) au-dessous de la zone de plongée intérieure ($T_i$) du réceptacle voisin superposé tandis que des renforcements de parois s'étendant vers l'extérieur (15) sont établis dans la zone libre extérieure ($F_a$) au-dessus de la zone de plongée extérieure ($T_a$) du réceptacle voisin de dessous dans l'empilage.

2. Réceptacle selon la revendication 1, caractérisé en ce que la paroi avant (4) est légèrement incurvée dans la zone moyenne (M) pour augmenter la résistance.

3. Réceptacle selon la revendication 1, caractérisé en ce que dans la zone libre intérieure ($F_i$) les renforcements de paroi 16 constituent des supports pour le réceptacle superposé voisin dans l'empilage.

4. Réceptacle selon la revendication 3, caractérisé en ce que les supports (16) consistent en des prolongements vers l'intérieur des patins de glissement (6, 6).

5. Réceptacle selon l'une des revendications 1 à 4, caractérisé en ce que des porte-galets (17) sont prévus dans la zone libre extérieure de la paroi avant (4).

6. Réceptacle selon la revendication 5, caractérisé en ce que les porte-galets (17) sont établis comme des cames basculant autour d'un axe horizontal (18).

7. Réceptacle selon la revendication 6, caractérisé en ce que des galets de centrage (11') sont montés sur les porte-galets (17).

8. Réceptacle selon la revendication 7, caractérisé en ce que les galets de centrage (11') sont réglables en hauteur.

9. Réceptacle selon l'une des revendications 1 à 8 avec membrures de renforcement des parois latérales (3, 3), caractérisé en ce que les membrures sont disposées dans la zone libre extérieure et la zone libre intérieure.

FIG.1

0 066 683

**FIG.2**

0 066 683

FIG.3

FIG. 4

FIG.5

FIG.8

FIG.6

FIG.7

FIG.9